Europäisches Patentamt

European Patent Office

Office européen des brevets

(11) Numéro de publication : **0 519 848 A1**

# (12) DEMANDE DE BREVET EUROPEEN

(21) Numéro de dépôt : **92420208.8**

(22) Date de dépôt : **16.06.92**

(51) Int. Cl.$^5$ : **B60R 22/32**

(30) Priorité : **17.06.91 FR 9107506**

(43) Date de publication de la demande :
**23.12.92 Bulletin 92/52**

(84) Etats contractants désignés :
**DE ES GB IT**

(71) Demandeur : **Antunes, Hélio**
**9, allée Beethoven**
**F-38800 Le Pont de Claix (FR)**

(72) Inventeur : **Antunes, Hélio**
**9, allée Beethoven**
**F-38800 Le Pont de Claix (FR)**

(54) **Système de verrouillage à ouverture automatique pour ceintures de sécurité.**

(57)    Système pour déverrouiller une ceinture de sécurité d'automobile automatiquement quelques secondes après un choc.

Il est constitué d'un boîtier (10) qui retient une boucle (1) par un verrou (11).

La boucle (1) est équipée d'un temporisateur mécanique (2) qui se déclenche quand il y a une traction violente sur la ceinture (19).

La traction sur la ceinture provoque une pression sur un levier (6) dont l'embout (7) déclenche le mécanisme, entraînant en rotation un bras articulé (4) qui appuie sur une tige (5).

En descendant la tige (5) fait reculer le verrou et libère ainsi la boucle (1).

Ce dispositif selon l'invention est essentiellement destiné au système de verrouillage des ceintures de sécurité et concerne particulièrement la sécurité routière.

FIG. 1

EP 0 519 848 A1

La présente invention concerne le système de verrouillage des ceintures de sécurité d'automobiles.

Traditionnellement. seule une intervention manuelle peut dégager un automobiliste de sa ceinture de sécurité.

L'invention consiste à remédier à cet inconvénient par un système de déverrouillage automatique à retardement. Le dispositif selon l'invention déverrouille automatiquement la ceinture quelques secondes après un choc du véhicule.

Dans ce but une boucle de fixation vient s'emboîter dans un boîtier qui la retient par un verrou.

Selon l'invention le système a été équipé d'un temporisateur monté sur la boucle qui se déclenche quand il y a traction violente sur la ceinture. La traction sur la ceinture provoque une pression sur un levier dont l'embout fait sauter le frein du mécanisme.

Le temporisateur est un ressort enroulé comprimé autour d'un axe et pourvu d'un frein. Quand on fait sauter le frein le ressort se déroule en faisant tourner son axe.

Selon l'invention l'axe a une partie carrée sur laquelle on a monté un bras articulé.

Quand le ressort va se dérouler. l'axe va tourner. entrainant le bras articulé qui va faire descendre une tige dans le boîtier. Comme le bout de la tige est conique. elle va facilement glisser le long de la boucle et faire reculer le verrou libérant ainsi la boucle.

D'après ce type de réalisation un ressort pousse le verrou en permanence, c'est pourquoi, le système peut être pourvu d'un ressort qui tire sur le bras articulé exerçant une force antagoniste au ressort du verrou.

Les dessins annexés illustrent l'invention.

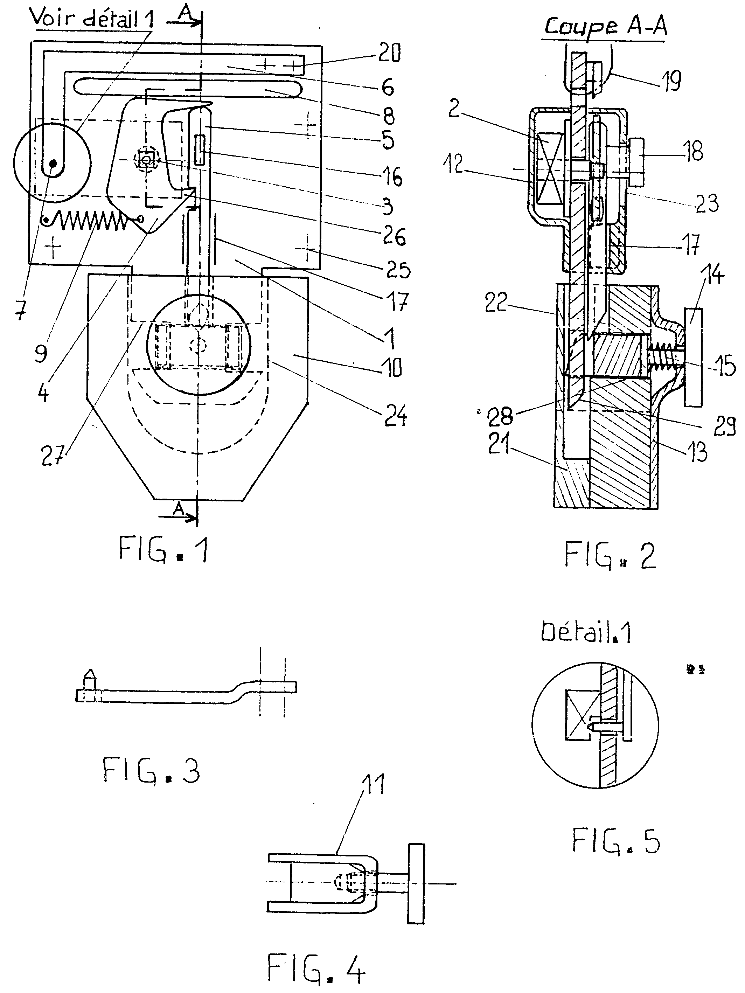

- la figure 1 représente l'ensemble vu de face.
- la figure 2 représente l'ensemble vu de profil selon une coupe brisée à plans parallèles. Elle fait apparaître également un boitier de garniture de la boucle coupé indépendement du reste.
- la figure 3 représente le levier qui sert à faire sauter le frein.
- la figure 4 représente le verrou vu de dessus avec une poignée de déverrouillage manuel.
- la figure 5 représente le détail du levier qui agit sur le frein du retardateur.

En référence à ces dessins le dispositif comporte une boucle (1) équipée d'un temporisateur (2) dont l'axe (3) comporte un carré sur lequel est monté le bras articulé (4) qui pousse la tige (5) aidé par la traction d'un ressort (9). Une lumière (8) assure le passage de la ceinture (19). Un levier (6) agit sur le frein du retardateur par un cône (7).

La boucle (1) glisse dans une rainure (24) d'un boitier (10) et refermée par une plaque (21). Un verrou (11) qui coulisse dans une lumière (28) retient la boucle (1) par les encoches (27). Un ressort (15) prend appui sur une garniture (13) et pousse le verrou en permanence. Selon une variante, un élastique peut remplacer le ressort (15). Le boitier (10) peut être relié au plancher par une vis. Pour faciliter sa pénétration dans le boîtier. le bout de la boucle est arrondi en (29).

Une poignée (14) permet le retrait manuel du verrou.

Afin de maintenir la tige (5) en position haute le bras articulé (4) est pourvu d'un bec (26). Le bras (4) sera refermé sur l'axe (3) par une vis non dessinée ici.

La tige (5) sera guidée en translation par une forme moulée (17) du boîtier (12) et une lumière (23) qui sert au passage de la poignée (16) qui est revêtue d'un bouton (18). Un évidement (22) guide le passage de (5) dans le boîtier (10). La fixation de la garniture (12) est prévue par des vis (25) et on peut fixer (6) sur (1) en (20) soit par vis, soit par une brasure.

Ce système peut être entièrement réalisé sans usinage, sauf les trous de fixation.

Le temporisateur (2) peut être trouvé dans le commerce.

Selon le mode de réalisation, le boîtier (10) représente ici l'assemblage de plusieurs pièces moulées. embouties. métalliques et plastiques.

Selon le cas (13) peut être une garniture isolante de (10) et d'une manière différente. un temporisateur dont le ressort serait assez puissant, peut éviter le ressort (9).

Il est impossible de verrouiller la ceinture si le système de sécurité n'est par remonté.

Le système selon l'invention est destiné au verrouillage des ceintures de sécurité et concerne particulièrement la sécurité routière.

## Revendications

1) Système de verrouillage à ouverture automatique pour ceinture de sécurité caractérisé par ce que lors d'une traction, la ceinture (9) écrase un levier (6) dont l'embout (7) fait sauter le frein d'un mécanisme (2) dont l'axe (3) entraine en rotation une came, ou bras articulé (4) qui anime la tige (5) d'un mouvement qui repousse le verrou (11).

2) Système selon revendication 1 caractérisé par ce que le mécanisme (2) est un temporisateur mécanique.

3) Système selon revendication 1 caractérisé par ce qu'il est monté sur une boucle (1) qui rentre dans un boîtier (10) contenant le verrou (11) qui la retient.

4) Système selon revendication 1 caractérisé par ce qu'un ressort (9) exerce une force antagoniste au ressort (15) du verrou (11).

5) Système selon une quelconque des revendications précédentes caractérisé par ce qu'il comporte une poignée de déverrouillage manuel (14).

Voir détail 1

Coupe A-A

FIG . 1

FIG . 2

FIG . 3

FIG . 4

Détail . 1

FIG . 5

EP 0 519 848 A1

Office européen
des brevets

**RAPPORT DE RECHERCHE EUROPEENNE**

Numero de la demande

EP 92 42 0208

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | DE-A-3 444 434 (KRATZIG WERNER) <br> * page 3; figures 1,2 * <br> --- | 1,2,4,5 | B60R22/32 |
| A | US-A-3 235 930 (CHAPIN E. AND BISHOP L.) <br> * figures 1-11 * <br> * colonne 1, ligne 1 - colonne 5, ligne 65 * <br> --- | 1,2,4,5 | |
| A | US-A-3 855 674 (THIEL) <br> * figures 1-15 * <br> * abrégé * <br> * colonne 3, ligne 14 - colonne 6, ligne 58 * <br> --- | 1-5 | |
| A | US-A-4 678 928 (NISHIMURA ET AL.) <br> * figures 1-4 * <br> * abrégé * <br> * colonne 3, ligne 19 - colonne 5, ligne 28 * <br> * colonne 6, ligne 4 - colonne 7, ligne 16 * <br> --- | 1,2,5 | |
| | | | **DOMAINES TECHNIQUES RECHERCHES (Int. Cl.5 )** |
| A | FR-A-2 576 260 (SIMPA SOCIETE ET FEUILLET RENE) <br> * figures 1-7 * <br> * abrégé * <br> * page 6, ligne 5 - page 13, ligne 14 * <br> ----- | 1 | B60R |

Le présent rapport a été établi pour toutes les revendications

| Lieu de la recherche | Date d'achèvement de la recherche | Examinateur |
|---|---|---|
| LA HAYE | 18 SEPTEMBRE 1992 | D'SYLVA C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

4